## Europäisches Patentamt
## European Patent Office
## Office européen des brevets

(19)

(11) Numéro de publication: **0 013 259 B1**

# FASCICULE DE BREVET EUROPEEN

(12)

(45) Date de publication du fascicule du brevet: **26.05.82**

(51) Int. Cl.³: **F 16 C 31/06, F 16 C 29/06**

(21) Numéro de dépôt: **79810188.7**

(22) Date de dépôt: **27.12.79**

(54) Elément de guidage axial-rotatif.

(30) Priorité: **31.12.78 CH 13265/78**

(43) Date de publication de la demande:
**09.07.80 Bulletin 80/14**

(45) Mention de la délivrance du brevet:
**26.05.82 Bulletin 82/21**

(84) Etats contractants désignés:
**AT BE DE FR IT NL SE**

(56) Documents cités:

**CH - A5 - 579 721**
**FR - A - 1 484 800**
**FR - A - 1 540 710**
**FR - A - 1 582 155**
**FR - A1 - 2 357 775**
**GB - A - 896 251**
**GB - A - 868 712**
**US - A - 3 893 732**

(73) Titulaire: **SRO Kugellagerwerke J. Schmid-Roost AG**
**Oerlikonerstrasse 7**
**CH-8050 Zurich (CH)**

(72) Inventeur: **Borel, Denis**
**Rietacker 7**
**CH-9548 Matzingen (CH)**

(74) Mandataire: **Dietlin, Henri et al,**
**DIETLIN, MOHNHAUPT & Cie 3, quai du Mont-Blanc**
**CH-1201 Genève (CH)**

Courier Press, Leamington Spa, England.

## Elément de guidage axial-rotatif

La présente invention a pour objet un élément de guidage pour mouvement linéaire illimité et/ou rotatif par contact à billes sur un arbre lisse comprenant un manchon extérieur, une cage tubulaire intérieure libre en rotation et retenue axialement relativement au manchon, cette cage comportant des logements en forme de circuits fermés, formés de deux rectilignes longitudinaux crevant sa paroi et reliés entre eux par des courbes à leurs extrémités, les courbes réservant des languettes destinées à porter les parties de la cage intérieures aux circuits, ces circuits étant garnis de billes assurant le contact entre l'arbre et l'alésage du manchon, et des moyens positionnant la cage à billes axialement relativement au manchon.

On connaît les éléments du guidage linéaire d'un élément cylindrique par contact de circulation de billes sur un arbre sous différentes appellations, tel que roulements axiaux, roulements linéaires, douilles à billes. Ces appellations se rapportent généralement toutes à un même objet, soit, le guidage d'un élément cylindrique par l'intermédiaire de billes sur un arbre, les billes étant recyclées dans des circuits fermés sans fin, ce qui donne une course linéaire illimitée à l'élément. Dans le cas bien particulier où un mouvement de rotation est désiré séparément ou simultanément au mouvement de translation, on fait appel au roulement dit axial et rotatif ou rotatif linéaire. Actuellement, on trouve sur le marché deux sortes de roulements permettant une rotation et une translation illimitée.

a) Un élément à deux roulements qui consiste à monter un roulement à aiguilles ou à billes radial en plus d'un roulement linéaire à circulation de billes. Un exemple d'un élément présentant deux roulements, c'est-à-dire un premier roulement constitué de circuits de circulation de billes et un deuxième roulement constitué d'un groupe de billes ou d'aiguilles est illustré dans le brevet française No. 1 540 710, notamment dans les fig. 2 et 3, respectivement 4 et 6. Cet élément a comme principal défaut son encombrement extérieur trop important pour de petits éléments.

b) Un élément à alternance de contact et circulation de billes dans une cage, illustré par exemple par le brevet suisse No. 579 721 et qui consiste en un manchon cylindrique extérieur comportant dans son alésage des secteurs de dégagement et des secteurs de travail, ces derniers assurant le contact de l'arbre par l'intermédiaire de billes disposées dans des circuits de circulation fermés pratiqués dans une cage tubulaire libre en rotation située dans le manchon et positionnée axialement relativement au manchon par des butées. La rotation est possible par alternance de contact des secteurs de travail sur les billes des parties rectilignes des circuits de la cage, si les valeurs angulaires réciproques sont conformes à une loi utilisant une fenêtre géométrique dans une combinaison générale. Ce système est efficage pour des guidages axiaux et rotatifs de grande précision, ses défauts consistent en une limite en capacité de charge, en vitesse de rotation et en un coût de fabrication élevé, un grand nombre de circuits de billes étant obligatoires pour permettre sa réalisation géométrique. De plus, cet élément est difficilement réalisable dans de petites dimensions.

Le but de la présente invention est de pallier à ces inconvénients et de proposer un élément pour déplacements linéaires illimités sur un arbre accompagné ou non d'une rotation ayant les caractéristiques suivantes:

— construction simple comportant un minimum de pièces et de billes.
— Un coût de fabrications intéressant.
— Une bonne capacité de charge.
— Peu de variation de la capacité de charge quels que soient les mouvements d'utilisation.
— Un faible encombrement.
— Une bonne aptitute en vitesse de rotation.
— Une bonne fiabilité.
— Une bonne précision de guidage.
— Une disposition géométrique interne permettant sa réalisation dans de petites dimensions.

L'élément de guidage selon l'invention est caractérisé en ce que le manchon comporte un alésage cylindrique et continu en son intérieur, la cage à billes étant pourvue d'au moins trois circuits distincts fermés de circulation de billes, toutes les billes d'au moins un circuit de circulation formant un groupe de billes étant d'un diamètre différent des billes des autres circuits.

Selon un mode d'exécution préféré, la cage à billes est pourvue de trois circuits fermés de circulation de billes, un des circuits étant garni de billes semblables entre elles mais dont le diamètre est plus petit d'une valeur de 1/10 à 1/95 du diamètre des billes des deux autres circuits. Les trois circuits de circulation peuvent former entre eux un angle de 120°.

Selon un autre mode d'exécution, la cage à billes est pourvue de quatre circuits fermés de circulation de billes, deux de ces circuits étant garnis de billes semblables entre elles mais dont le diamètre est plus petit d'une valeur de 1/12 à 1/110 du diamètre des billes des deux autres circuits. Dans ce mode d'exécution à quatre circuits de circulation, deux des rectilignes faisant partie chacun de deux circuits peuvent former entre eux un angle au centre de 110°, les deux autres rectilignes des deux autres circuits formant entre eux un angle au centre de 80°, la bissectrice de ces angles passant par un plan de symétrie de l'élément.

La cage à billes peut comporter plus de deux groupes distincts de diamètre de billes et/ou peut comprende plus de quatre circuits fermés de circulation de billes.

L'invention a également pour objet un élément de guidage pour mouvement linéaire illimité et/ou rotatif par contact à billes sur un arbre lisse comprenant un manchon extérieur, une cage tubulaire intérieure, cette cage comportant des logements en forme de circuits fermés, formés de deux rectilignes longitudinaux crevant sa paroi et reliés entre eux par des courbes à leurs extrémités, ces circuits étant garnis de billes assurant le contact entre l'arbre et l'intérieur du manchon, caractérisé en ce que le manchon se présente sous la forme d'une bague cylindrique maintenue entre deux couvercles d'extrémité solidaires de la cage à billes et fixés sur celle-ci, la longueur de la bague étant sensiblement égale à la longueur des rectilignes des circuits de billes et les billes se trouvant dans les courbes d'extrémité des circuits étant positionnées radialement par des tunnels pratiqués dans les couvercles circulaires, la face frontale interne de chacun des couvercles assurant une friction contre les faces frontales correspondantes de la bague.

Le dessin représente, à titre d'exemples, plusieurs modes de réalisation et variantes d'un élément de guidage par mouvement linéaire illimité et/ou rotatif par contact à billes sur un arbre selon l'invention.

Dans le dessin:

La fig. 1 représente une coupe radiale à travers un premier mode de réalisation d'un élément dans une exécution comprenant quatre circuits de billes,

la fig. 2 représente une vue de côté partiellement en coupe du mode de réalisation de la fig. 1,

la fig. 3 représente une vue frontale partiellement en coupe du mode de réalisation des fig. 1 et 2, la vue frontale présentant des parties arrachées derrière l'extrémité avant de deux chemins de circulation de billes,

la fig. 4 représente une coupe radiale à travers un deuxième mode de réalisation d'un élément dans une exécution comprenant trois circuits de billes,

la fig. 5 représente une vue de côté partiellement en coupe du mode de réalisation de la fig. 4, et comportant une retenue axiale de la cage par un système à deux billes à 180°,

la fig. 6 représente une vue frontale partiellement en coupe du mode de réalisation des fig. 4 et 5,

la fig. 7 représente une coupe axiale d'une variante d'un élément comportant les rectilignes des circuits de billes inclinés sur les génératrices de la cage, une spirale de décharge de travail dans l'alésage du manchon, le manchon comportant deux diamètres extérieurs conférant à l'élément un caractère auto-alignant,

la fig. 8 représente un mode de montage dans une pièce tubulaire compensant l'excentrique d'une paire d'éléments d'un mode de réalisation représenté dans la fig. 9 et comportant un manchon à caractère auto-alignant, les éléments étant liés entre eux par une entretoise de liaison indexant dans une position polaire inverse la cage des éléments,

la fig. 9 représente un élément dans la variante comportant un système d'indexage polaire de la cage,

la fig. 10 représente un mode de montage de deux éléments de la fig. 9 avec plusieurs entretoises de liaison indexant les cages dans une même position polaire,

la fig. 11 représente une cage à billes comportant le système d'indexage polaire des fig. 8 à 10,

la fig. 12 représente une entretoise de liaison,

la fig. 13 représente une vue de côté, partiellement en coupe d'une première variante des modes d'exécution des fig. 1 à 6,

la fig. 14 est une vue frontale, partiellement en coupe de la première variante de la fig. 13,

la fig. 15 est une vue de côté, partiellement en coupe d'une deuxième variante des modes d'exécution des fig. 1 à 6, et

la fig. 16 est une vue frontale, partiellement en coupe de la deuxième variante de la fig. 15.

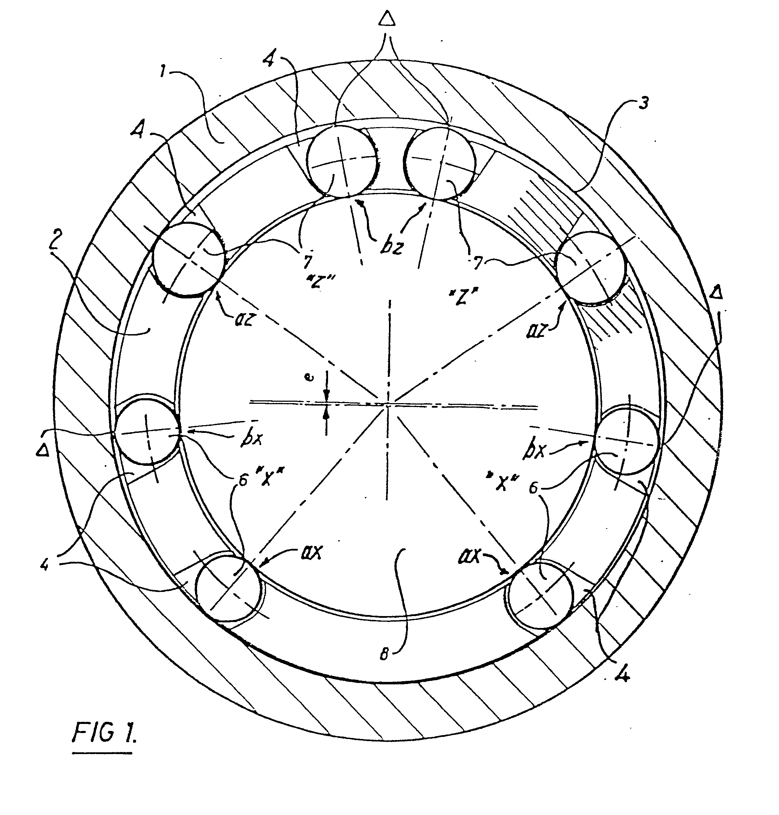

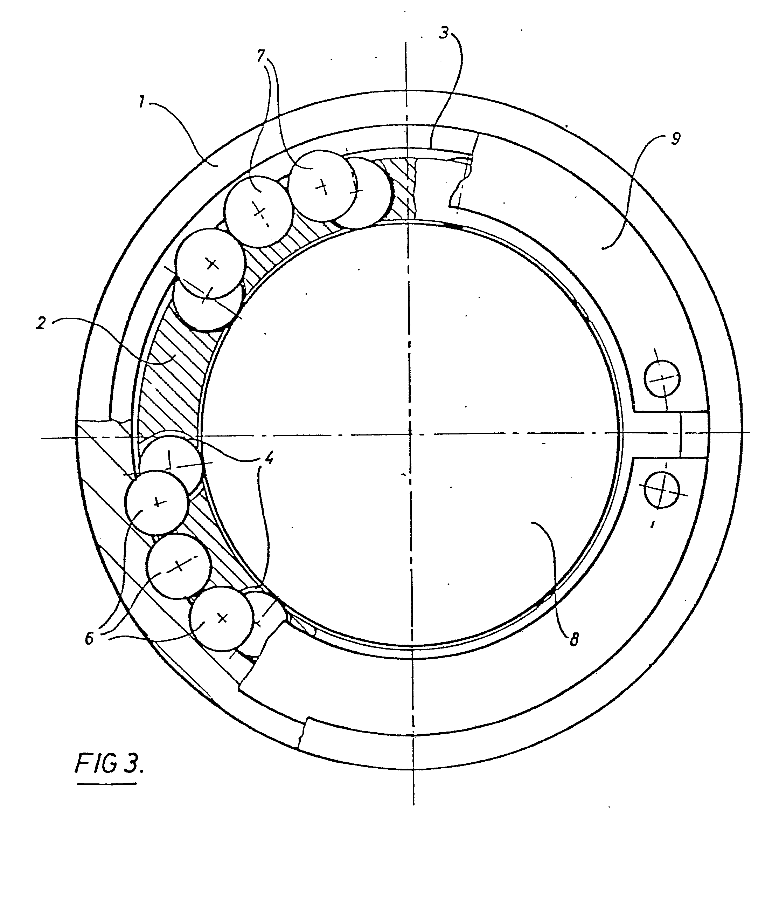

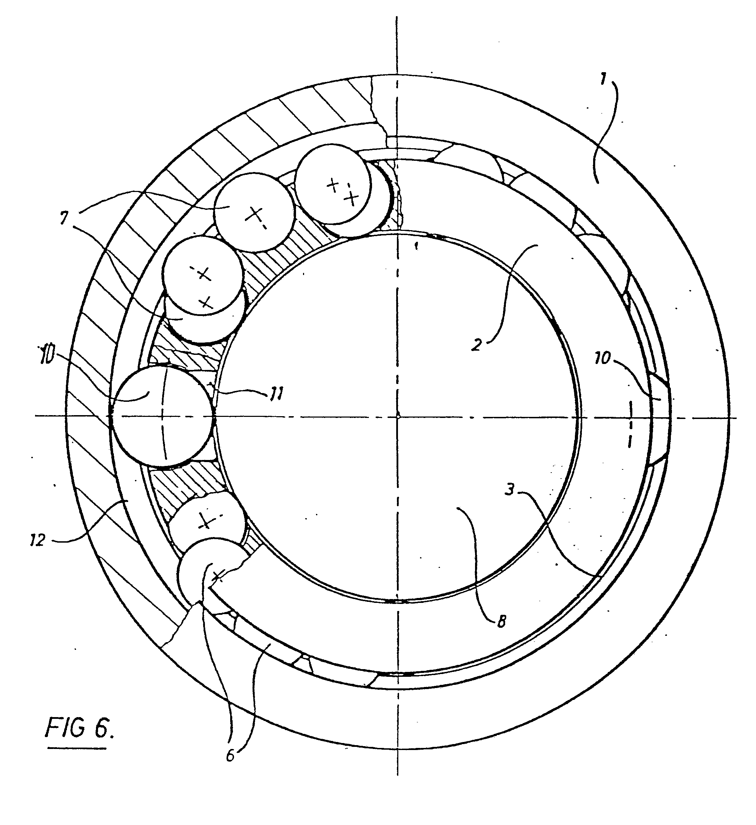

L'élément de guidage pour mouvements linéaires illimités et rotatifs représenté dans les fig. 1 à 6 comprend un manchon extérieur 1, une cage à billes 2, des billes 6 et 7, un arbre 8 et des moyens de retenue axiale 9 de la cage 2 relativement au manchon 1. Le manchon extérieur 1 comporte un alésage cylindrique 3 dépourvu de secteurs de travail et de dégagement comme c'est le cas pour les manchons de l'art antérieur. Cet alésage de contact de travail 3 est donc continu sur toute la circonférence du manchon 1. A l'intérieur du manchon se trouve la cage à billes tubulaire 2 libre en rotation comportant au moins trois circuits fermés 4 de circulation de billes, ces circuits 4 étant composés de deux rectilignes longitudinaux crevant la paroi de la cage 2 et reliés à leurs extrémités par des courbes 5.

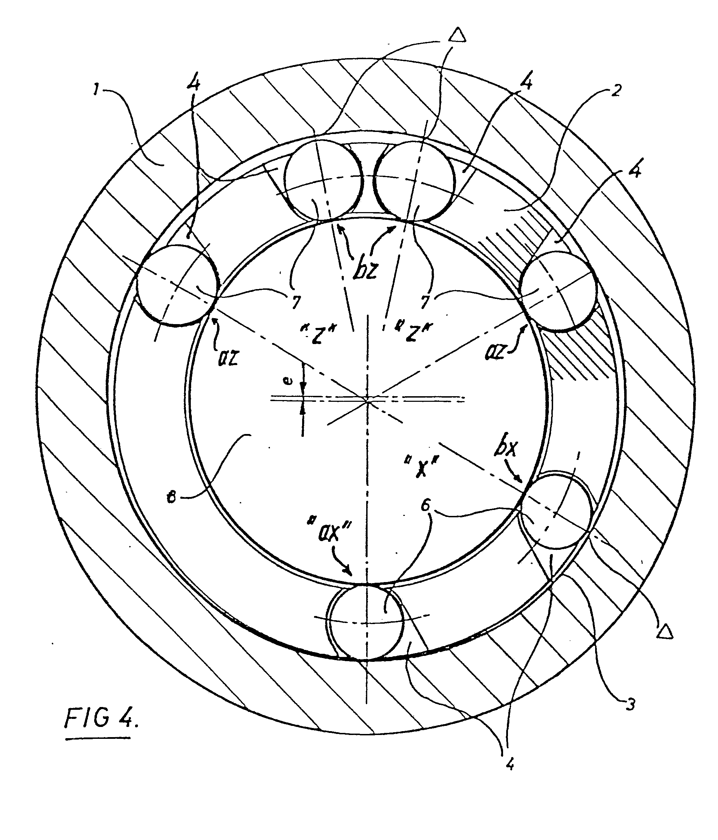

Pour une meilleure compréhension de la construction et du fonctionnement de l'élément, chaque circuit de circulation 4 de billes est formé d'un rectiligne de contact ou de charge appelé "a" et d'un rectiligne de décharge ou de recyclage appelé "b"; en outre, les circuits fermés de circulation sont divisés en deux catégories (voir fig. 1 et 4), la catégorie "x" et la catégorie "z", le ou les circuits de la catégorie "x" étant garnis de billes 6 ayant toutes un diamètre identique entre elles mais légèrement plus petit que le diamètre des billes 7 des circuits de la catégorie "z". De plus, on appelera les rectilignes longitudinaux "ax et az": rectilignes de contact et les rectilignes "bx et bz": rectilignes de recyclage.

Dans le deuxième mode de réalisation des fig. 4 à 6, l'élément est pourvu de trois circuits fermés 4 de circulation de billes (voir en particulier fig. 4), un circuit est de la catégorie "x", les deux autres circuits sont de la catégorie "z", ce qui entraîne un rectiligne de contact d'une appellation "ax", les deux autres rectilignes de contact étant d'une appellation "az". Dans cette exécution, les lignes relient le centre au point d'intersection des trois rectilignes de contact "ax+deux az" forment entre eux un angle au centre d'environ 120° sur la circonférence de la cage. Les deux rectilignes de recyclage "bz" se trouvent proches l'un de l'autre et forment un angle au centre entre eux d'au plus 30°, la bissectrice de cet angle étant la même que la bissectrice de l'angle au centre de 120° formé par les deux rectilignes de contact "az", le rectiligne de recyclage "bx" se trouvant diamétralement environ à l'opposé d'un quelconque des deux rectilignes de contact "az". Dans cette exécution, la différence de diamètre des billes 6 du circuit de la catégorie "x" relativement au diamètre des billes 7 des circuits de la catégorie "z" est comprise entre 1/10 et 1/100 du diamètre moyen des billes de l'élément.

Dans le premier mode de réalisation des fig. 1 à 3, l'élément est pourvu de quatre circuits fermés 4 de circulation de billes, deux des circuits sont de la catégorie "x", les deux autres circuits étant de la catégorie "z", ce qui entraîne deux rectilignes de contact d'une appellation "ax", les deux autres rectilignes de contact étant d'une appellation "az". Dans cette exécution, les points d'intersection des deux rectilignes de contact "az" forment entre eux un angle au centre d'environ 110° sur la circonférence de la cage, les deux rectilignes de contact "ax" formant entre eux un angle au centre d'environ 80° sur cette circonférence. De plus, un axe de symétrie de l'élément passe par les bissectrices de ces angles. Les deux rectilignes de recyclage "bz" se trouvent proches l'un de l'autre et leurs points d'intersection forment un angle au centre entre eux d'au plus 30°, la bissectrice de cet angle étant axée sur les bissectrices des angles au centre de 110° et 80° ci-dessus formés par les rectilignes de contact "az et ax", les deux rectilignes de recyclage "bx" formant entre eux un angle au centre d'environ 170° dont la bissectrice est axée sur les bissectrices des angles décrits ci-dessus. Dans cette exécution, la différence du diamètre des billes 6 des circuits de la catégorie "x" relativement au diamètre des billes 7 des circuits de la catégorie "z" est comprise entre 1/12 et 1/110 du diamètre moyen des billes de l'élément.

De par la disposition angulaire des rectilignes longitudinaux des circuits de billes et de par la différence de diamètre des billes de certains de ces circuits, il résulte un petit décentrage "e" de l'alésage 3 du manchon 1 réciproquement à l'arbre 8 (voir fig. 1 et 4). Ce décentrage "e" sert à créer un jeu radial "Δ" suffisant pour permettre la circulation de retour des rectilignes de recyclage "bx et bz". En effet, ce jeu radial "Δ" se déplace en rotation avec la cage et de par la disposition géométrique générale des rectilignes de billes, ce jeu "Δ" existe que pour les billes des rectilignes du groupe "b", les rectilignes de groupe "a" ont leurs billes en contact de travail sur des positions angulaires favorables entre l'alesage 3 du manchon 1 et l'arbre 8.

Une calculation de la valeur "Δ" définie comme étant le jeu entre l'alésage intérieur du manchon 1 et le sommet des billes des rectilignes "b" dans deux exemples d'éléments donne les valeurs chiffrées suivantes:

Execution avec trois circuits de circulation de billes situés angulairement selon l'exemple des fig. 4 à 6.

— Diamètre de l'arbre=12 mm
— Diamètre des billes du circuit "x"=2,381 mm.
— Diamètre des billes des circuits "z"=2,5 mm.
— Diamètre de l'alésage du manchon=16,922 mm.
— Décentrage "e"=0,079 mm.
— Jeu "Δ" sur les billes des rectilignes "bz"=0,039 mm.
— Jeu "Δ" sur les billes du rectiligne "bx"=0,04 mm.

Exécution avec quatre circuits de circulation de billes situées angulairement selon l'exemple des fig. 1 à 3.

— Diamètre de l'arbre=30 mm.
— Diamètre des billes des circuits "x"=4,0 mm.
— Diamètre des billes des circuits "z"=4,170 mm.
— Diamètre de l'alesage du manchon=38,195 mm.
— Décentrage "d"=0,129 mm.
— Jeu "Δ" sur les billes des rectilignes "bz"=0,053 mm.
— Jeu "Δ" sur les billes des rectilignes "bx"=0,088 mm.

On remarque que l'on peut prendre comme rapport

$$"\Delta" \approx \frac{e}{2}$$

dans l'exécution à trois circuits et que cette dernière est géométriquement meillure relativement à l'exécution à quatre circuits.

Les essais pratiques ayant démontrés qu'un jeu radial "Δ" d'une valeur de 1/120 du diamètre de billes était suffisant pour permettre un passage de recyclage des billes des rectilignes "b", on aboutit sur un système nouveau autorisant quelque chose qui semblait jusqu'ici impossible, c'est-à-dire d'avoir un roulement linéaire illimité et rotatif à circulation de billes par recyclage sans alternance de contact sur des secteurs angulaires successifs de travail, ceci de plus avec un faible nombre de billes situées sur un seul étage de travail, ces billes assurant à la fois le contact de guidage pour tous le mouvements demandés. Lorsque l'élément subit une rotation par rapport à l'arbre, il se comporte comme un roulement à billes usuel, la cage tournant à une vitesse differentielle. Si l'utilisation est une translation, les billes circulent dans les chemins et passent par les courbes des circuits du rectiligne "a" au rectiligne "b". Quant l'élément est utilisé en mouvement combiné axial et rotatif, les billes tournent avec la cage en circulant dans les circuits, les billes en contact de travail roulant dans la direction du mouvement résultant. Le contact des billes en travail est continu malgré la rotation, l'élément n'a donc sensiblement pas de variation de capacité de charge quelle que soit sa rotation. On remarque aussi que la circulation des billes s'effectue toujours dans un seul sens en rapport direct avec le déplacement réciproque de l'arbre et du manchon, quels que soient les mouvements angulaires. D'autre part, lors d'une utilisation axiale et rotative, l'absence de secteurs de travail et de dégagement dans le manchon permet à l'élément des vitesses de rotation intéressantes et une bonne résistance à l'usure, les billes se renouvellant par recyclage et roulant en travail sur des surfaces continues.

En outre, les éléments décrits sont particulièrement avantageux au niveau géométrique avec trois, voire quatre circuits de circulation de billes, ce faible nombre permettant un coût de fabrication intéressant, d'autant plus que la cage à billes peut être moulée en une matière plastique tel que des polyamides et que les billes n'ont pas de dimensions limitées par un manque d'espace angulaire. Les avantages précités et relatifs aux modes d'exécution des fig. 1 à 6 ne sont effectivement pas présents dans les éléments de l'art antérieur axial rotatif à alternance de contact.

De plus, l'élément selon l'invention peut être fabriqué dans de petites dimensions, par exemple pour des diamètres de l'arbre de 4 mm, le diamètre extérieur de l'élément étant d'au plus 8 mm. Cette particularité est nouvelle pour un guidage axial illimité et rotatif par contact à billes et ouvre des perspectives d'application dans des domaines tels que la mécanographie, l'automation, l'électronique, l'aéronautique et autres disciplines.

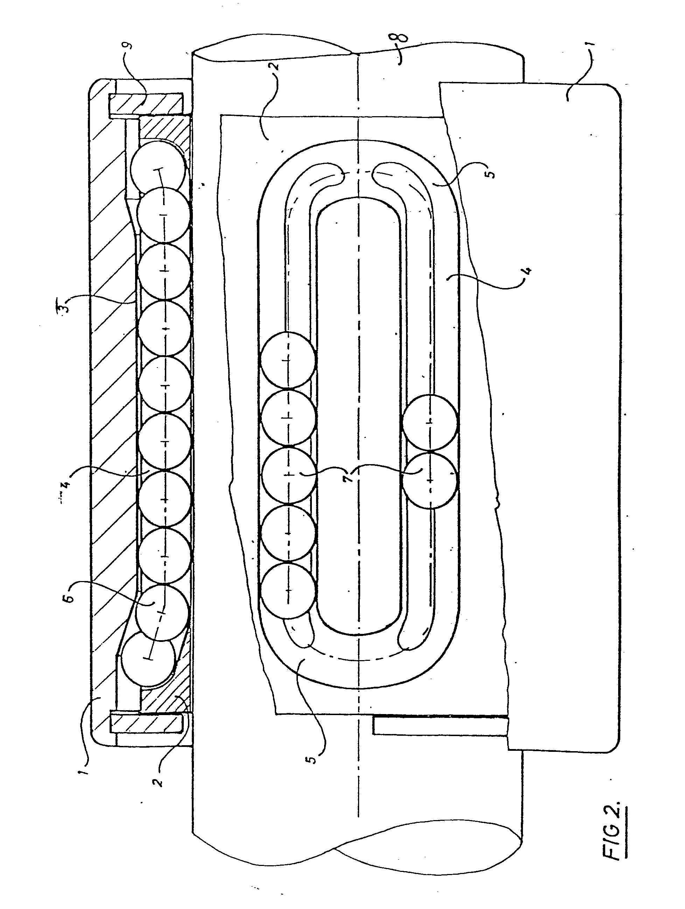

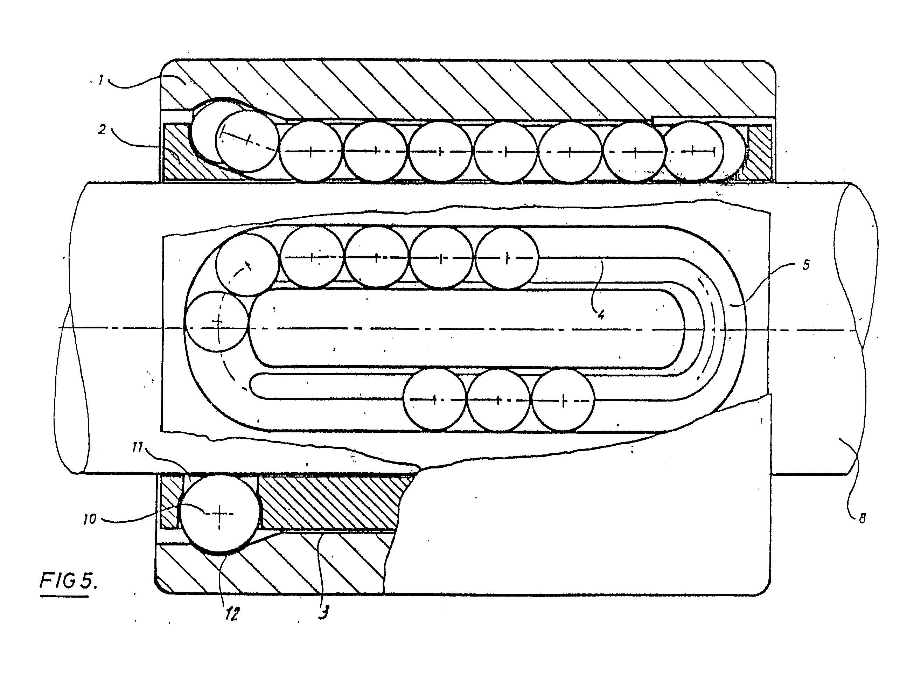

Selon le mode de réalisation des fig. 1 à 3, les billes s'éloignent de l'arbre pendant le passage dans les courbes des circuits à au moins une de leurs extrémités, à cet endroit, elles suivent un dégagement circulaire sensiblement en forme de tronc de cône pratiqué à l'intérieur du manchon et circulent sur des rampes de montée et de descente dans la cage de manière que le sommet des billes se trouve à une distance radiale régulière dans la rainure de forme du manchon. Pour permettre un montage de l'élément avec la cage garnie préalablement de ses billes, il n'est possible d'entrer cette dernière dans le manchon que si les billes montent radialement que dans les courbes d'une seule extrémité de la cage. De ce fait, les parties centrales des circuits ne peuvent être liées à l'ensemble de la cage seulement à une extrémité (Fig. 5) ou comme dans la fig. 2 aux deux extrémités, la languette de liaison de l'extrémité située à droite de la fig. 2 étant alors de faible section relativement à la languette de gauche. Les languettes de liaison sont des parties des chemins de circulation des billes situées dans les courbes où la cage à billes n'est pas totalement ouverte. Ces languettes forment un pont de liaison destiné à rendre solidaires de la cage les parties intérieures aux circuits.

Selon une variante non représentée, au moins une des extrémités des circuits de billes peut présenter plus d'une languette, par exemple deux languettes, la cage étant crevée au milieu de la courbe de droite 5 du circuit de la fig. 2. Des circuits à trois languettes seront par exemple utilisés pour des éléments de guidage de grandes dimensions.

Se trouvant entre l'alésage 3 du manchon 1 et l'arbre 8, la cage à billes tubulaire 2 peut être positionnée radialement par ces deux références, un jeu adéquat étant prévu. Axialement, la cage peut être positionnée relativement au manchon par des butées d'extrémité à friction 9 fixées au manchon ou à la cage ou par des butées à billes non représentées.

Dans le mode de réalisation des fig. 4 à 6, la cage à billes 2 est arrêtée longitudinalement au moyen de deux billes 10 d'un plus grand diamètre que les billes de contact de travail, ces deux billes 10 se trouvant dans un logement 11 traversant la paroi de la cage en regard de la rainure circulaire 12 de forme pratiquée dans le manchon 1. Ces billes 10 positionnent axialement la cage, étant en prise avec un léger jeu radial dans la rainure circulaire 12 du manchon et maintenues radialement à leur place par l'arbre 8 où fonctionne l'élément. Cette solution supprime les frictions de retenue lors d'un mouvement de rotation et permet une cage à billes d'une longueur identique au manchon, le montage est aisé avec une cage en matière plastique, les billes 10 de retenue étant introduites par déformation de l'entrée de leur logement 11 du côté interne de l'élément. De plus, pour bénéficier d'un jeu radial invariable et être de même dimension, ces deux billes sont placées à 180° l'une de l'autre sur un axe de l'élément perpendiculaire à la direction du décentrage "e".

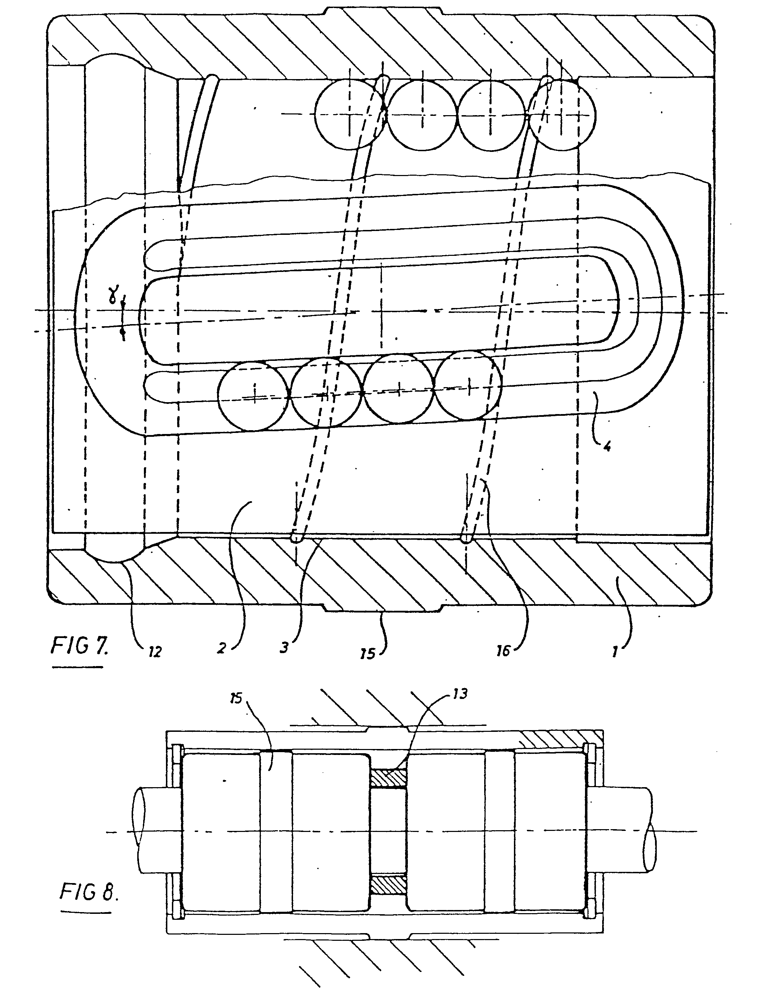

Dans la variante de la fig. 7, les rectilignes des circuits de circulation 4 sont légèrement inclinés par rapport aux génératrices de la cage, tous les rectilignes de travail "a" étant parallèles entre eux, cela permet une répartition de roulement favorable lors d'un fonctionnement uniquement linéaire de l'élément, chaque bille en travail roulant sur son propre chemin. Toutefois, l'angle d'inclinaison ou d'hélice $\gamma$

peut être au plus de 10° relativement à l'axe de l'élément, ce mode de construction augmentant de par une impossibilité géométrique la contrainte de charge sur certaines billes des rectilignes de contact "a". Il en résulte une diminution de la capacité de charge de l'élément.

Dans les fig. 1 à 6, on a décrit un mode d'exécution à 3 circuits de circulation de billes et un mode d'exécution à quatre circuits. Il est évident pour l'homme du métier que les roulements décrits ne sont pas limités à ces deux possibilités et que l'on peut réaliser des roulements à cinq circuits, voire plus de cinq circuits. En outre, plus de deux catégories différentes de circuits peuvent être utilisées. Par exemple, on peut prévoir trois catégories de circuits, chaque catégorie étant garnie de billes d'un diamètre différent.

La réalisation des éléments qui viennent d'être décrits est possible de par le décentrage du manchon relativement à l'arbre par l'ensemble intermédiaire créant ce décentrage "e", cet intermédiaire, la cage garnie de ses circuits de billes de différentes dimensions positionne relativement deux surfaces cylindriques. Selon l'exécution, au moins deux rectilignes de billes roulent sur l'image des surfaces tangentes à l'arbre et à l'alésage du manchon, faisant un faible angle l'une par rapport à l'autre, ces billes auront donc tendance à dévier de la direction de travail lors d'un déplacement linéaire de par des résultantes latérales au sens du mouvement. Dans une utilisation courante, on peut considérer cet effet parasite comme négligeable, la longeur de contact de travail du manchon étant relativement courte, les billes ne subissent plus cet effet lors du recyclage, la déviation est donc annulée à chaque sortie de contact de travail. Toutefois, le phénomène reste gênant lorsque l'élément fonctionne seulement sur une faible course alternative, c'est pourquoi dans une variante on peut annuler cet inconvénient en dotant l'alesage du manchon d'une spirale 16 (fig. 7) de faible largeur et profundeur déchargeant alternativement les billes en travail, le pas de cette spirale 16 étant prévu de telle façon que le contact soit perdu sur seulement une bille à la fois dans le rectiligne "a".

D'autre part, lors d'une utilisation rotative continue dans un seul sens de par les rapports des circonférences entre l'alésage du manchon, l'arbre et les différentes grandeurs de billes, ces dernières étant comprises dans un système planétaire, les billes du petit diamètre auront tendance à rattraper les billes du grand diamètre dans le sens de la rotation. Cet effet est annulé dans une utilisation courant où les billes se recyclent dans un mouvement également linéaire suffisamment important. Dans d'autres cas, la variante avec une spirale 16 annule cet effet. Il est à remarquer que la vitesse différentielle relative du centre de gravité des billes des différentes dimensions est de toute façon faible, les rapports des circonférences des billes 6, des billes 7, de l'arbre et de l'alesage du manchon donnant un chemin parcouru presque identique aux deux catégories de billes dans une utilisation normale.

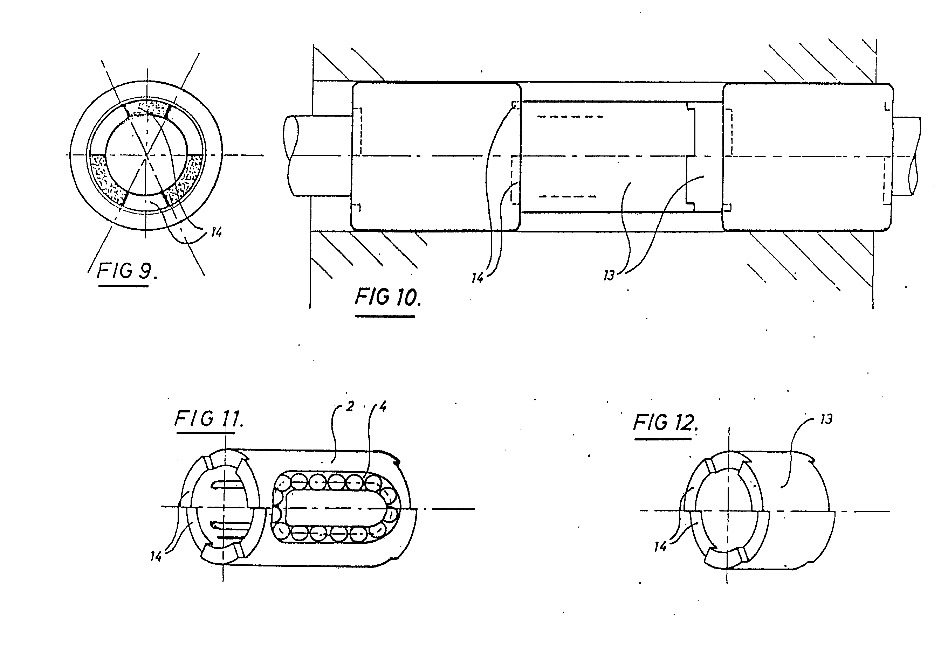

L'élément selon l'invention malgré son décentrage "e" trouve de nombreuses applications, la valeur de l'excentrique étant le plus souvent admise dans les tolérances demandées lors d'un guidage axial et rotatif, en particulier dans des procédés d'automation, de manutention, de butées de positionnement, de transmission de mouvement. Souvent, son faible prix de revient, sa bonne capacité de charge, ses qualités de fonctionnement, la possibilité de travailler sand graissage en font un élément de guidage qui remplace avantageusement le guidage par douilles lisses. Les limites du système se trouvent plutôt dans le mode de montage, en effet, si l'élément est utilisé seul, le guidage étant suffisant, le problème du petit décentrage ne se pose en principe pas, si par contre deux éléments sont montés à la suite dans un alésage, il faudra les rendre dépendant l'un de l'autre, c'est pourquoi on relie dans ce cas les deux éléments par une ou plusieurs entretoises de la liaison tubulaire 13 (fig. 8) ayant la propriété de former un ensemble modulaire permettant de monter les éléments à des distances relatives voulues. Les entretoises de liaison 13 ont la particularité de situer réciproquement les cages à billes des roulements à une position angulaire déterminée, de ce fait, si deux roulements ont leur cage dans une même position angulaire, le décentrage de ces deux éléments sera le même dans la même direction, leurs axes coïncideront et l'arbre travaillant avec ces deux guidages se trouvera dans des conditions d'alignement correctes (voir également fig. 10).

Dans une variante, l'extérieur du manchon 1 comporte deux diamètres, le grand diamètre 15 relativement court conférant à l'élément un comportement autoalignant dans son logement, la position de travail réciproque de deux éléments avec un même arbre étant de ce fait résolue.

En assemblant les deux solutions présentées ci-dessus, il est possible avec quatre roulements à caractéristiques auto-alignant, reliés par paires avec une entretoise de liaison 13 positionnant chaque élément d'une paire à une position angulaire inverse, les paires d'éléments étant montées dans un tube extérieur à caractère également auto-alignant, d'obtenir dans ce cas particulier le guidage parfaitement concentrique d'un arbre commun (voir fig. 8).

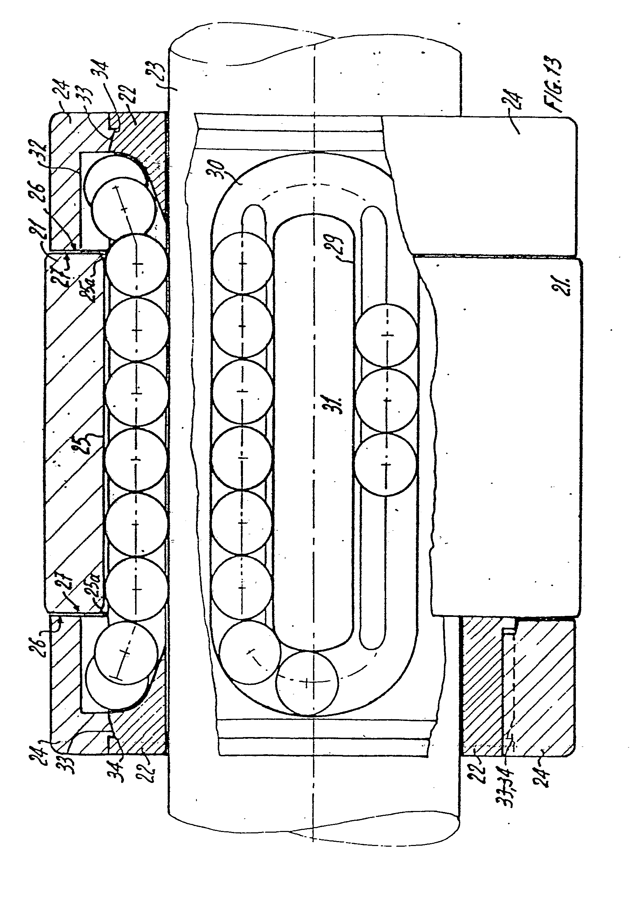

Les entretoises de liaison 13 ont un système d'indexage géométrique 14 inverse aux deux extrémités, à leur image, la cage à billes 2 d'élément de cette variante possède le même indexage 14 à ses extrémités, de ce fait, il suffit de retourner l'élément relié pour obtenir un indexage identique ou inverse (voir fig. 8, 9, 10, 11 et 12). Les formes des moyens d'indexage polaires 14 de la cage à billes et des entretoises de liaison 13 sont réalisées facilement si ces pièces sont en une matière plastique moulée tel que polyamide (voir fig. 11 et 12). Les entretoises de liaison 13 sont positionnées radialement par leur alésage intérieur qui est d'un diamètre légèrement supérieur au diamètre de l'arbre avec lequel fonctionne les éléments.

Il est à remarquer que si deux éléments de guidage selon l'invention se trouvent à une distance réciproque suffisante, ils pourront en principe fonctionner avec le même arbre sans adjonction de système d'indexage, l'erreur due au décentrage "e" étant absorbée par la tolérance d'ajustage de l'arbre dans les éléments.

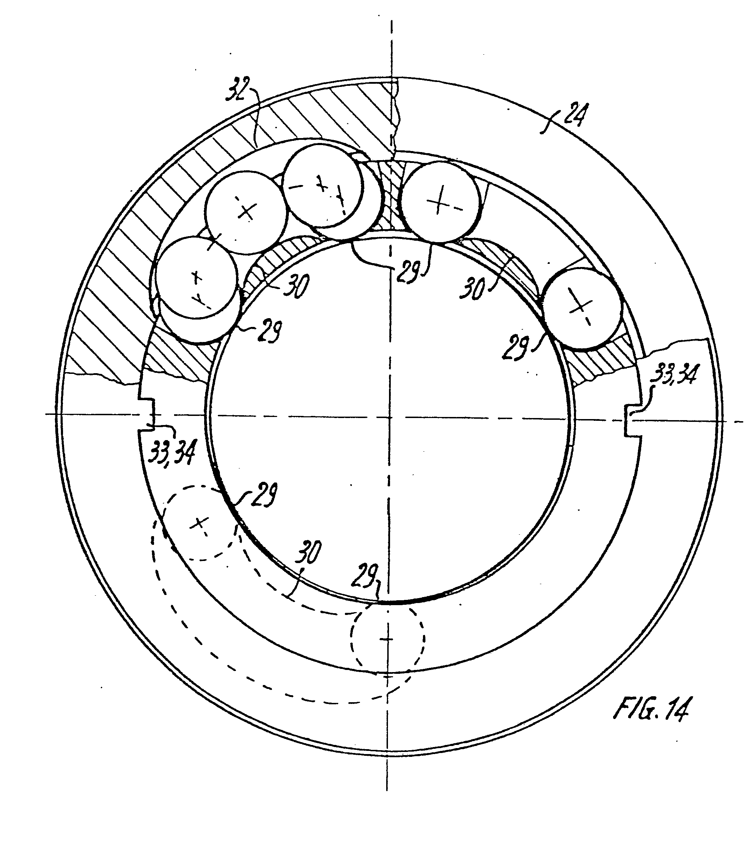

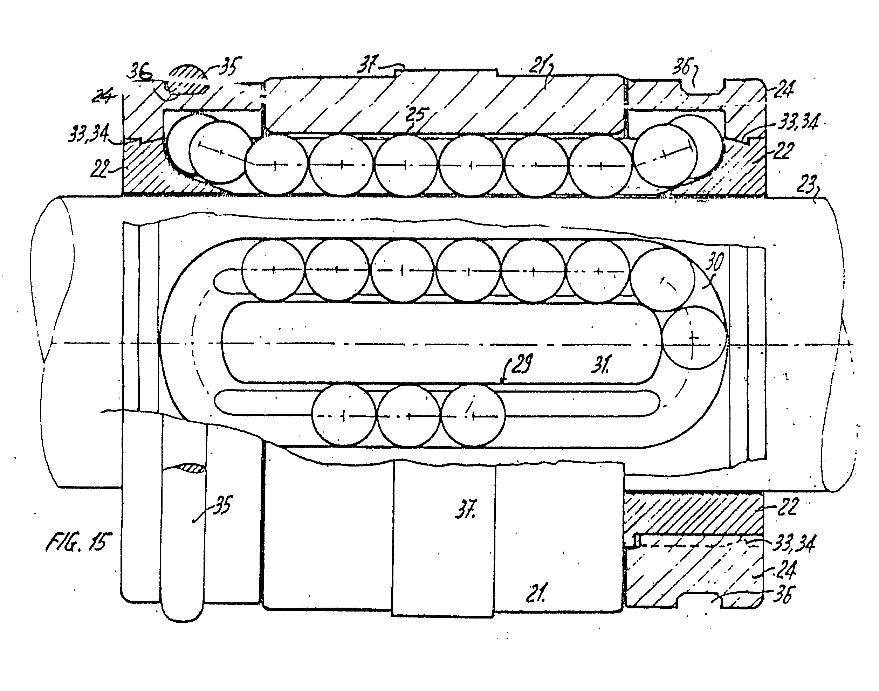

Dans la première variante des fig. 13 et 14, qui peut être un élément à trois, quatre ou à un plus grand nombre de circuits de billes pour mouvement linéaire et/ou rotatif illimité sur un arbre 23, le manchon se présente sous la forme d'une bague en acier 21 et la cage à billes 22 sert de support à deux couvercles d'extrémité 24 venant enfermer la bague 21. La bague tubulaire 21 est dépourvue de secteur de dégagement et son alésage 25 est parfaitement circulaire, lisse et d'un diamètre constant sur toute sa longueur. Son alésage intérieur 25 présente cependant à ses extrémités deux parties arrondies 25a (fig. 13) destinées à éviter de présenter aux billes des circuits une arête à angle vif. Selon une variante non représentée, les parties arrondies 25a des extrémités de l'alésage intérieur 25 peuvent être remplacées par des parties en tronc de cône. De ce fait, cette bague 21 est d'un coût de fabrication intéressant comparé aux manchons à secteurs de dégagement et de travail à l'usinage relativement compliqué des roulements axiaux et rotatifs existants sur le marché. L'élément des fig. 13 et 14 est réalisé avec une cage 22 et des couvercles rotatifs 24 en matière plastique moulée. On aboutit ainsi à un guidage à contact à billes axial et rotatif d'un faible prix de revient. D'autre part, l'élément est d'un encombrement favorable lui permettant de nombreuses applications.

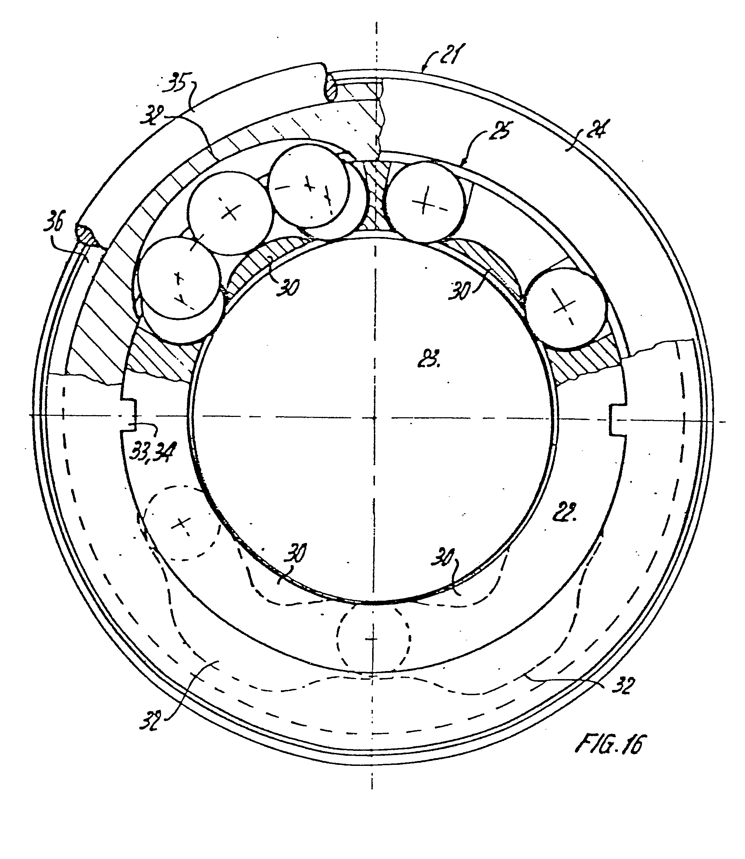

La bague 21 est positionée à friction au milieu de la cage à billes 22 par les deux couvercles 24 fixés à cette cage 22, un petit jeu étant prévu entre les faces 26 des couvercles 24 et les faces 27 de la bague 21 pour permettre à cette dernière de tourner par rapport à l'ensemble cage-couvercles. La cage à billes 22 comporte au moins trois circuits fermés 29 de circulation de billes, ces circuits 29 étant composés de deux rectilignes longitudinaux crevant outre la paroi de la cage 22 et reliés à leurs extrémités par des courbes 30. Dans ces courbes 30, les billes s'éloignent de l'arbre 23 pour permettre l'existence d'une section de matière servant à maintenir la partie centrale 31 des circuits 29. Pour permettre ce éloignement radial des billes, les couvercles 24 comportent en regard des courbes 30 des dégagements 32 en forme de tunnel calculés de telle façon que les billes qui se trouvent dans les courbes 30 possèdant un jeu radial de fonctionnement entre le fond des courbes du circuit et le couvercle 24. Comme représenté dans les fig. 13 et 14, ainsi que dans les fig. 15 et 16 décrites plus loin, les dégagements 32 en forme de tunnels sont parallèles à l'axe de l'élément en regard des courbes des circuits de billes. Dans une exécution préférée, les couvercles sont fixés à la cage axialement et contre une rotation par une combinaison de parties positives 33 et de dégagement 34 pratiquées dans les couvercles 24 et aux extrémités de la cage 22, le montage étant possible par déformation élastique des matériaux employés.

Il est évident pour l'homme du métier que les parties positives 33 et de dégagement 34 prévues dans les couvercles 24 et aux extrémités de la cage 22 peuvent être supprimées ou remplacées par de simples rainures et nervures correspondantes. Les couvercles peuvent dans ce cas soit être collés, soit soudés sur les extrémités de la cage.

Dans la deuxième variante des fig. 15 et 16, on retrouve tous les éléments 21 à 34 décrits en regard de la variante des fig. 13 et 14. Cependant, chacun des couvercles d'extrémité 24 présentent un anneau en élastomère 35 positionné par exemple dans une rainure 36 sur le diamètre extérieur de chaque couvercle. Ces anneaux 35 servant à bloquer l'ensemble cage 22—couvercle 24 dans le logement non représenté où est fixé l'élément, que devient, dans ce cas, un guidage à billes pour mouvement uniquement linéaire. Dans ce cas, on peut utiliser l'excentricité "e" pour changer une distance "d'entre axe" en tournant l'ensemble cage—couvercle au montage dans le logement. Ces anneaux 35 peuvent aussi servir de retenue générale de l'élément dans un logement non représenté peu précis ou d'une dimension plus grande.

En variante, il est possible de remplacer les anneaux 35 par des moyens pour bloquer en rotation la cage par rapport au manchon. On peut d'autre part usiner le diamètre extérieur du manchon excentrique par rapport à son diamètre intérieur de la même valeur que le décentrage dû aux différences de diamètres des billes des circuits de circulation. En positionnant la cage de manière adéquate par rapport au manchon et en la bloquant, on peut alors éliminer l'excentrique de l'élément, qui devient alors un élément à déplacement linéaire uniquement.

Dans la deuxième variante des fig. 15 et 16, la bague en acier 21 comporte en son centre sur son extérieure une courte partie circulaire 37 au diamètre nominal d'ajustage, seul ce diamètre 36 étant rectifié. L'élément, dans ce cas, combiné ou non avec les anneaux en élastomère possède une caractéristique auto-alignante. Outre ces avantages, cette dernière variante permet l'utilisation rationnelle de deux éléments pouvant être rapprochés l'un à la suite de l'autre sur le même arbre, la petite excentricité "e" étant sans effet pour des solutions de transmission de mouvement rencontrés souvent dans l'industrie de l'automation.

L'élément représenté dans les fig. 15 et 16 présente des circuits de billes 29 dont les rectilignes se prolongent dans les tunnels 32. Les languettes formant les courbes 30 amorcent le virage de la courbe du circuit puis commencent à monter relativement à l'arbre 23 comme représenté dans la fig. 16.

La variante représentée dans les fig. 15 et 16 est un élément à trois circuits de billes et les couvercles (voir fig. 16) présentent quatre tunnels 32, les deux tunnels inférieurs étant symétriques et un seul étant utilisé dans la variante des fig. 15 et 16. Cette réalisation permet de ne prévoir qu'un seul couvercle utilisable aux deux extrémités de la cage à billes.

L'élément selon l'invention est décrit en regard des fig. 1 à 12 comporte un manchon en acier trempé à une dureté d'environ 62 RC, rectifié dans son alésage et sur son extérieur. L'absence de secteurs de travail et de dégagement permet par surcroit un usinage intérieur par "honning", ce qui réduit sensiblement le coût de l'outillage de fabrication. La cage à billes est dans une éxécution préférée moulée en matière plastique auto-lubrifiant tel que le polyamide 6 graphité. Les billes sont en acier au chrome, leur dureté est d'environ 62 RC et leur précision de sphéricité et de diamètre est de l'ordre du micromètre.

L'exécution de l'élément selon l'invention est possible depuis des diamètres d'arbre de l'ordre de trois à quatre millimètres jusqu'à plus de 50 millimètres. Le diamètre des billes se situe entre 1/4 du diamètre de l'arbre pour les plus petits modèles et le 1/9 du diamètre de l'arbre pour les grands modèles. Le nombre de circuits de billes est de trois pour les petits modèles et peut être de quatre pour les modèles du diamètre d'arbre dès 12 millimètres jusqu'à environ 50 mm et plus pour de plus grandes dimensions.

Le diamètre de travail de l'arbre sur les billes des rectilignes de contact est prévu avec une légère précontrainte sur l'arbre étant au diamètre maximum de sa tolérance, de ce fait, l'élément est prévu pour fonctionner avec les arbres d'une tolérance h6 se trouvant couramment sur le marché.

La faible différence du diamètre des billes des différentes catégories de circuits est résolu souvent par la combinaison des billes se trouvant sur le marché en particulier en utilisant les dimensions en mesures métriques d'une part et les dimensions en mesures en pouces d'autre part, tel que par exemple les billes d'un diamètre de 1,5 mm avec 1,588 mm=1/16×25,4; 2,3812 mm=3/32×25,4 avec 2,5 mm; 3 mm avec 3,175 mm=1/8×25,4.

Dans une exécution non représentée, indépendamment de la catégorie des circuits, on peut monter dans les circuits de la cage un nombre pair de billes de deux dimensions différentes, chaque grande bille alternant avec une petite bille, les grandes billes assurant le contact de travail et les petites billes servant d'intermédiaire éliminant le frottement inverse de rotation des billes en contact lors d'un mouvement linéaire; toutefois, cette exécution complique l'opération de montage des billes dans l'élément et diminue fortement sa capacité de charge.

Pour garantir un fonctionnement de circulation libre, la largeur des chemins des circuits a une valeur supérieure de environ 1/10 du diamètre des billes de ces circuits, de ce fait, on peut prévoir des circuits appropriés à chaque catégorie en tenant compte aussi du calcul du multiple de diamètre de billes pour la longueur totale du chemin de circulation.

## Revendications

1. Elément de guidage pour mouvement linéaire illimité et/ou rotatif par contact à billes sur un arbre lisse (8, 23) comprenant un manchon extérieur (1, 21), une cage (2, 22) tubulaire intérieure libre en rotation et retenue axialement relativement au manchon (1, 21), cette cage (2, 22) comportant des logements en forme de circuits fermés (4, 29), formés de deux rectilignes longitudinaux crevant sa paroi et reliés entre eux par des courbes (5, 30) à leurs extrémités, les courbes (5, 30) réservant des languettes destinées à porter les parties de la cage intérieures aux circuits, ces circuits (4, 29) étant garnis de billes (6, 7) assurant le contact entre l'arbre et l'alésage du manchon, et des moyens positionnant la cage à billes (2, 22) axialement relativement au manchon (1, 21), caractérisé en ce que le manchon (1, 21) comporte un alésage cylindrique et continu en son intérieur, la cage à billes (2, 22) étant pourvue d'au moins trois circuits (4, 29) distincts fermés de circulation de billes (6, 7), toutes les billes d'au moins un circuit de circulation formant un groupe de billes étant d'un diametre différent des billes des autres circuits.

2. Elément selon la revendication 1, caractérisé en ce que la cage à billes (2, 22) est pourvue de trois circuits fermés de circulation de billes, un de ces circuits étant garni de billes (6) semblables entre elles mais dont le diamètre est plus petit d'une valeur de 1/10 à 1/100 du diamètre des billes (7) des deux autres circuits.

3. Elément selon les revendications 1 et 2, caractérisé en ce que la cage à billes (2, 22) comporte trois rectilignes de billes faisant partie chacun d'un des trois circuits distincts de circulation de billes, les lignes reliant le centre aux points d'intersection de ces rectilignes avec un plan perpendiculaire à l'axe de l'arbre formant entre eux un angle au centre d'environ 120°.

4. Elément selon la revendication 1, caractérisé en ce que la cage à billes (2, 22) est prouvue de quatre circuits fermés de circulation de billes, deux de ces circuits étant garnis de billes (6) semblables entre elles mais dont le diamètre est plus petit d'une valeur de 1/12 à 1/110 du diamètre des billes (7) des deux autres circuits.

5. Elément selon les revendications 1 et 4, caractérisé en ce que la cage à billes (2, 22) comporte quatre rectilignes de billes faisant partie chacun d'un des quatre circuits distincts de circulation de billes, les lignes reliant le centre aux points d'intersection de deux de ces rectilignes avec un plan perpendiculaire à l'axe de l'arbre formant entre eux un angle au centre d'environ 110°, les lignes reliant le centre aux points d'intersection des deux autres rectilignes avec un plan perpendiculaire à l'axe de l'arbre formant entre eux un angle au centre d'environ 80°, la bissectrice de ces angles passant par un plan de symétrie de l'élément.

6. Elément selon la revendication 1, caractérisé en ce que la cage à billes (2, 22) comporte plus de deux groupes différents de diamètres de billes.

7. Elément selon la revendication 6, caractérisé en ce que la cage à billes (2, 22) est pourvue de plus de quatre circuits fermés de circulation de billes.

8. Elément selon la revendication 1, caractérisé en ce que les rectilignes des circuits de circulation de billes sont parallèles à l'axe de l'élément.

9. Elément selon la revendication 1, caractérisé en ce qu'au moins un des deux rectilignes des circuits de circulation de billes forme un angle avec une génératrice de la cage.

10. Elément selon la revendication 1, caractérisé en ce que les moyens positionnant la cage à billes (2) axialement relativement au manchon sont des moyens de retenue à friction (9).

11. Elément selon la revendication 1, caractérisé en ce que les moyens positionnant la cage à billes (2) axialement relativement au manchon sont des butées à billes (10).

12. Elément selon la revendication 1, caractérisé en ce que les moyens positionnant la cage à billes (2) axialement relativement au manchon sont au moins une bille (10) se trouvant dans un logement (11) distinct de la cage crevant sa paroi en regard d'une rainure circulaire (12) interne du manchon (1) à au moins une extrémité de l'élément.

13. Elément selon la revendication 12, caractérisé en ce que les moyens positionnant la cage à billes (2) axialement dans une rainure circulaire de forme sont deux billes (10) situées à 180° l'une de l'autre sur un axe perpendiculaire à la bissectrice de l'angle au centre séparant les deux rectilignes longitudinaux de contact de travail des deux circuits garnis des billes (7) les plus grandes de l'élément.

14. Elément selon les revendications 12 et 13, caractérisé en ce que au moins une rainure circulaire (12) interne du manchon (1) servant au passage des courbes (5) des circuits de billes est la même rainure circulaire de forme positionnant les billes (10) de retenue axiale de la cage (2) relativement au manchon (1).

15. Elément selon la revendication 1 et l'une quelconque des revendications 12, 13 et 14, caractérisé en ce que la cage à billes (2) possède à au moins une de ses extrémités des moyens de positionnement angulaire (14) d'une pièce additionnelle (13) à l'élément.

16. Elément selon la revendication 15, caractérisé en ce que les moyens de positionnement angulaire (14) se trouvant aux deux extrémités de la cage à billes (2), les moyens d'une extrémité étant dans une position angulaire opposée à 180° des moyens de l'autre extrémité.

17. Elément selon la revendication 15, caractérisé en ce que la pièce additionnelle à l'élément est au moins une entretoise (13) de liaison tubulaire comportant des moyens venant en prise avec les moyens de positionnement angulaire (14) de la cage (2).

18. Elément selon la revendication 1, caractérisé en ce que le manchon extérieur (1, 21) est en acier préalablement trempé puis rectigié sur sa surface extérieure et dans son alésage intérieur.

19. Elément selon la revendication 1, caractérisé en ce que le manchon (1) comporte deux diamètres extérieurs, la partie du manchon ayant le plus grand diamètre (15) étant d'une longueur d'au plus de $\frac{1}{4}$ de la longueur totale de l'élément.

20. Elément selon la revendication 1, caractérisé en ce que les languettes de la cage à billes (2) liant la partie centrale des circuits (4) de circulation sont d'une section différence aux deux extrémités des circuits.

21. Elément selon les revendications 1 et 20, caractérisé en ce que les parties centrales des circuits (4) de circulation sont liées à la cage à billes (2) par trois languettes, deux de ces languettes étant disposées à une extrémité des circuits (4).

22. Elément selon les revendications 1 et 10, caractérisé en ce que le manchon (21) se présente sous la forme d'une bague cylindrique plus courte que l'élément maintenu entre deux couvercles (24) rotatifs fixés à la cage à billes (22), la face frontale interne de chacun des couvercles (24) assurant une friction contre les faces frontales correspondantes du manchon (21), l'ensemble cage (22) et couvercles (24) étant libre en rotation relativement au manchon.

23. Elément selon la revendication 22, caractérisé en ce que les couvercles rotatifs (24) comportent des logements en forme de tunnels parallèles à l'axe de l'élément en regard des courbes (30) des circuits de billes.

24. Elément selon la revendication 22, caractérisé en ce que les couvercles rotatifs (24) sont fixés à la cage à billes (22) par des moyens (33, 34) s'emboîtant l'un dans l'autre, ces moyens étant de forme correspondante.

25. Elément selon la revendication 1 ou 22, caractérisé en ce que la cage à billes (2, 22) et/ou les couvercles (24) sont en matière plastique tel que polyamide.

26. Elément selon la revendication 22, caractérisé en ce que les couvercles rotatifs (24) comportent des moyens de logement d'au moins un anneau circulaire en matière souple sur leur diamètre extérieur.

27. Elément selon la revendication 22, caractérisé en ce que la bague en acier tubulaire comporte sur son diamètre extérieur au moins une rainure circulaire (36) pour loger au moins un anneau élastomère (35).

28. Elément selon la revendication 1, caractérisé en ce que le diamètre extérieur du manchon (1, 21) est rectifié excentrique par rapport à son diamètre intérieur de la même valeur que l'excentrique créé par les billes de diamètre différent des circuits de circulation.

29. Elément selon la revendication 1 ou 28, caractérisé en ce que le manchon (1, 21) est fixé relativement à la cage à billes (2, 22).

30. Elément selon la revendication 28, caractérisé en ce que le manchon (1, 21) est fixé relativement à la cage (2, 22) de manière à éliminer l'excentrique créé par les billes de différent diamètre des circuits.

**Patentansprüche**

1.—Längs- und/oder drehbewegliches Führungselement mit unbegrenzter Beweglichkeit durch Kugelberührung auf einer glatten Welle (8, 23), mit einer äusseren Hülse (1, 21), einem frei drehbeweglichen rohrförmigen inneren Käfig (2, 22), der axial gegenüber der Hülse (1, 21) festgehalten ist und in sich geschlossene Kugelumlaufwege (4, 29) aus jeweils zwei längsgerichteten, die Wandung des Käfigs (2, 22) durchsetzenden geraden Stücken und Endschleifen (5, 30), die die geraden Stücke verbinden, aufweist, wobei die Endschleifen (5, 30) Zungen freilassen, welche die Stege des Käfigs im Inneren der Umlaufwege tragen, und wobei die Umlaufwege (4, 29) mit Kugeln (6, 7) versehen sind, die die Berührung zwischen der Welle und der Hülsenbohrung vermitteln, und mit Mitteln zur axialen Positionierung des Kugelkäfigs (2, 22) gegenüber der Hülse (1, 21), dadurch gekennzeichnet, dass die Hülse (1, 21) im Inneren eine zylindrische und durchgehende Bohrung aufweist, dass der Kugelkäfig (2, 22) mit mindestens drie einzelnen geschlossenen Kugelumlaufwegen (4, 29) ausgestattet ist, und dass sämtliche Kugeln (6, 7) mindestens eines Umlaufweges eine Gruppe bilden, deren Durchmesser von denen der Kugeln der anderen Umlaufwege verschieden ist.

2.—Führungselement nach Anspruch 1, dadurch gekennzeichnet, dass der Kugelkäfig (2, 22) drei geschlossene Kugelumlaufwege aufweist, wobei einer dieser Umlaufwege mit Kugeln (6) versehen ist, die sich ähnlich sind, deren Durchmesser jedoch um 1/10 bis 1/100 kleiner ist als der Durchmesser der Kugeln (7) der beiden anderen Umlaufwege.

3.—Führungselement nach Anspruch 1 oder 2, dadurch gekennzeichnet, dass der Kugelkäfig (2, 22) drei gerade Kugelwege besitzt, die jeweils einem der drei einzelnen Umlaufwege zugehörten, wobei die Linien, die den Mittelpunkt mit den Schnittpunkten der geraden Wege mit einer zur Wellenachse senkrechten Ebene verbinden, einen Zentrumswinkel von etwa 120° miteinander bilden.

4.—Führungselement nach Anspruch 1, dadurch gekennzeichnet, dass der Kugelkäfig (2, 22) mit vier geschlossenen Kugelumlaufwegen ausgerüstet ist, wobei zwei dieser Umlaufwege Kugeln (6) aufweisen, die einander gleichen, deren Durchmesser jedoch um 1/12 bis 1/110 kleiner ist als der Durchmesser der Kugeln (7) der beiden anderen Umlaufwege.

5.—Führungselement gemäss Ansprüchen 1 bis 4, dadurch gekennzeichnet, dass der Kugelkäfig (2, 22) vier gerade Kugelwege besitzt, die jeweils einem der vier einzelnen Umlaufwege zugehören, wobei die Linien, die den Mittelpunkt mit den Schnittpunkten von zwei dieser geraden Stücke mit einer zur Wellenachse senkrechten Ebene verbinden, einen Zentrumswinkel von etwa 110° miteinander bilden, und wobei die Linien, die den Mittelpunkt mit den Schnittpunkten der beiden anderen geraden Wege mit einer zur Wellenachse senkrechten Ebene verbinden, einen Zentrumswinkel von etwa 80° miteinander bilden, und wobei die Winkelhalbierende dieser Winkel in einer Symmmetrieeebene des Führungselementes liegt.

6.—Führungselement nach Anspruch 1, dadurch gekennzeichnet, dass der Kugelkäfig (2, 22) mehr als zwei Gruppen von Kugeln mit jeweils unterschiedlichen Durchmesser aufweist.

7.—Führungselement nach Anspruch 6, dadurch gekennzeichnet, dass der Kugelkäfig (2, 22) mehr als vier in sich geschlossenen Kugelumlaufwege aufweist.

8.—Führungselement nach Anspruch 1, dadurch gekennzeichnet, dass die geraden Stücke der Kugelumlaufwege parallel zur Achse des Führungselementes liegen.

9.—Führungselement nach Anspruch 1, dadurch gekennzeichnet, dass mindestens eines der geraden Stücke im Kugelumlaufweg einen Winkel mit einer Erzeugenden des Kugelkäfigs bildet.

10.—Führungselement nach Anspruch 1, dadurch gekennzeichnet, dass die Mittel zum axialen Positionieren des Kugelkäfigs (2) gegenüber der Hülse solche Mittel (9) sind, die auf Reibung beruhen.

11.—Führungselement gemäss Anspruch 1, dadurch gekennzeichnet, dass die Mittel zum axialen Positionieren des Kugelkäfigs (2) gegenüber der Hülse Kugelanschläge (10) sind.

12.—Führungselement nach Anspruch 1, dadurch gekennzeichnet, dass die Mittel zum axialen Positionieren des Kugelkäfigs (2) gegenüber de Hülse mindestens in einer Kugel (10) bestehen, die sich in einem Sitz (11) im Kugelkäfig befindet, welcher dessen Wandung gegenüber einer inneren Ringnut (12) der Hülse (1) durchsetzt, und zwar mindestens an einem Ende des Führungselementes.

13.—Führungselement nach Anspruch 12, dadurch gekennzeichnet, dass die Mittel, welche den Kugelkäfig (2) axial in einer Kreisnut positionieren, durch zwei Kugeln (10) dargestellt sind, welche im Abstand von 180° voneinander auf einer Achse senkrecht zur Winkelhalbierenden des Zentrumswinkels liegen, welcher die beiden geraden Stücke derjenigen Kugelwege trennt, bei denen die Kugeln in Arbeitsberührung sind und mit den Kugeln (7) mit den grössten Durchmessern versehen sind.

14.—Führungselement nach Anspruch 12 und 13, dadurch gekennzeichnet, dass mindestens eine innere Kreisringnut (12) der Hülse (1), die zum Durchgang der Kurventeile (5) der Kugelumlaufwege dient, die gleiche Formkreisnut ist, mit welcher die Kugeln (10) zur axialen Sicherung des Käfigs (2) gegenüber der Hülse (1) zusammenwirken.

15.—Führungselement nach Anspruch 1 und einem der Ansprüche 12, 13 und 14, dadurch gekennzeichnet, dass der Kugelkäfig (2) an mindestens einem Ende mit Mitteln (14) zur winkelschlüssigen Positionierung eines zusätzlichen Bauteiles (13) ausgerüstet ist.

16.—Führungselement nach Anspruch 15, dadurch gekennzeichnet, dass die Mittel (14) zur winkelschlüssigen Positionierung sich an den beiden Endbereichen des Kugelkäfigs (2) befinden, wobei die Mittel an einem Ende gegenüber den Mitteln am anderen Ende um 180° versetzt sind.

17.—Führungselement nach Anspruch 15, dadurch gekennzeichnet, dass das zusätzliche Bauteil mindestens eine rohrförmige Verbindungshülse (13) ist, welche Mittel aufweist, die mit den Mitteln (14) zur winkelschlüssigen Einstellung am Kugelkäfig (2) in Eingriff bringbar sind.

18.—Führungselement nach Anspruch 1, dadurch gekennzeichnet, dass die äussere Hülse (1, 21) aus gehärtetem Stahl besteht un danach auf der Aussenfläche und in der Innenbohrung geschliffen ist.

19.—Führungselement nach Anspruch 1, dadurch gekennzeichnet, dass die Hülse (1) zwei Aussendurchmesser aufweist, wobei der Bereich mit dem grösseren Durchmesser (15) eine Länge von höchstens 1/4 der Gesamtlänge des Führungselements aufweist.

20.—Führungselement nach Anspruch 1, dadurch gekennzeichnet, dass die Zungen am Kugelkäfig (2), welche die mittleren Stege der Umlaufwege (4) miteinander verbinden, an den beiden Enden der Kugelumlaufwege unterschiedliche Querschnitte aufweisen.

21.—Führungselement nach Anspruch 1 und 20, dadurch gekennzeichnet, dass die mittleren Stege der Umlaufwege (4) mit dem Kugelkäfig (2) durch drei Zungen verbunden sind, wobei zwei Zungen an einem Ende der Umlaufwege (4) liegen.

22.—Führungselement nach den Ansprüchen 1 und 10, dadurch gekennzeichnet, dass die Hülse (21) die Form eines zylindrischen Ringes hat, der kürzer ist als das Führungselement und zwischen zwei Deckringen (24) gehalten ist, welche am Kugelkäfig (22) befestigt sind, dass die innere Stirnfläche jedes Deckringes (24) eine Reibungskraft auf die entsprechenden Stirnflächen der Hülse (21) ausübt, und dass die aus Kugelkäfig (22) und den Deckringen (24) gebildete Baugruppe gegenüber der Hülse (21) frei drehbar ist.

23.—Führungselement nach Anspruch 22, dadurch gekennzeichnet, dass die beiden Deckringe (24) tunnelförmige Ausnehmungen parallel zur Achse des Führungselementes aufweisen, die den gekrümmten Bereichen (30) der Kugelumlaufwege gegenüber liegen.

24.—Führungselement nach Anspruch 22, dadurch gekennzeichnet, dass die Drehringe (24) um Kugelkäfig durch Stellmittel (33, 34) befestigt sind, die ineinander eingreifen und eine Form aufweisen, die mit dem Stellmittel des jeweils anderen Teils zusammenwirkt.

25.—Führungselement nach Anspruch 1 oder 22, dadurch gekennzeichnet, dass der Kugelkäfig (2, 22) und/oder die Deckringe (24) aus Kunststoff, beispielsweise einem Polyamid, bestehen.

26.—Führungselement nach Anspruch 22, dadurch gekennzeichnet, dass die Deckringe (24) am äusseren Durchmesser Mittel zur Aufnahme mindestens eines Kreisringes aus biegsamem Material aufweisen.

27.—Führungselement nach Anspruch 22, dadurch gekennzeichnet, dass der rohrförmige Stahlring auf seinem Aussendurchmesser mindestens eine Ringnut (36) zur Aufnahme mindestens eines Ringes (35) aus einem Elastomer aufweist.

28.—Führungselement nach Anspruch 1, da-durch gekennzeichnet, dass der Aussendurch-messer der Hülse (1, 21) bezüglich auf den Innendurchmesser exzentrisch geschliffen ist, und zwar mit dem gleichen Wert der Exzentrizität, welche durch die Kugeln mit dem unterschiedlichen Durchmesser in den Umlaufwegen verursacht wird.

29.—Führungselement nach Anspruch 1 oder 28, dadurch gekennzeichnet, dass die Hülse (1, 21) gegenüber dem Kugelkäfig (2, 22) feststeht.

30.—Führungselement nach Anspruch 28, dadurch gekennzeichnet, dass die Hülse (1, 21) gegenüber dem Kugelkäfig (2, 22) derart befestigt ist, dass die Exzentrizität eliminiert wird, welche durch die Kugeln mit unterschiedlichem Durchmesser in den Umlaufwegen verursacht wird.

**Claims**

1.—A guide element for unlimited linear and/or rotational movement involving ball-bearing contact on a smooth shaft (8, 23), comprising an external sleeve (1, 21), an internal tubular casing (2, 22) able to freely rotate and axially retained relative to the sleeve (1, 21), this casing (2, 22) comprising seatings in the form of closed circuits (4, 29) formed by two rectilinear portions intersecting its wall and joined to each other by curved portions (5, 30) at their ends, these curved portions (5, 30) reserving tongue-like portions for supporting those casing portions which remain in the interior of the circuits, these circuits (4, 29) being provided with balls (6, 7) to effect contact between the shaft and the bore of the sleeve, and comprising means for axially positioning the ball-cage (2, 22) relative to the sleeve (1, 21), characterised in that the sleeve (1, 21) has a cylindrical and continuous internal boring, that the ball-cage (2, 22) is provided with at least three distinct and closed circulation circuits (4, 29) for balls (6, 7), all the balls of at least one circulation circuit forming a group of balls having a diameter different from that of the balls of the other circuits.

2.—An element according to Claim 1 characterised in that the ball-cage (2, 22) is provided with three closed ball circulation circuits, one of these circuits being equipped with balls (6) similar to each other but whose diameter is smaller by one tenth to one hundredth than the diameter of the balls (7) of the other two circuits.

3.—An element according to Claims 1 and 2, characterised in that the ball-cage (2, 22) comprises three rectilinear ball-bearing portions each forming part of one of the three distinct ball circulation circuits, the lines which connect the centre to the intersection points of said rectilinear portions with a plane perpendicular to the axis of the shaft, forming with one another an angle of about 120° at the centre.

4.—An element according to Claim 1, characterised in that the ball-cage (2, 22) comprises four closed ball circulation circuits, two of these circuits being equipped with balls (6) similar to each other but having a diameter which is by 1/12 to 1/110 smaller than the diameter of the balls (7) of the other two circuits.

5.—An element according to Claims 1 and 4, characterised in that the ball-cage (2, 22) comprises four rectilinear ball-bearing portions each forming part of one of the four distinct ball circulation circuits, the lines which connect the centre to the intersection points of two of these rectilinear portions with a plane perpendicular to the axis of the shaft, forming with one another an angle at the centre of about 110°, the lines with connect the centre to the intersection points of the two other rectilinear portions with a plane perpendicular to the axis of the shaft, forming with one another an angle at the centre of about 80°, the bisecting line of these angles lying in a plane of symmetry of the element.

6.—An element according to Claim 1 characterised in that the ball-cage (2, 22) comprises more than two groups of balls having different diameters.

7.—An element according to Claim 6, characterised in that the ball-cage (2, 22) comprises more than four closed ball circulation circuits.

8.—An element according to Claim 1, characterised in that the rectilinear portions of the ball circulation circuits are parallel to the axis of the element.

9.—An element according to Claim 1, characterised in that at least one of the two rectilinear portions of the ball circulation circuits form an angle with a generatrix of the casing.

10.—An element according to Claim 1, characterised in that the means for positioning the ball-cage (2) axially relative to the sleeve are frictional retaining means (9).

11.—An element according to Claim 1, characterised in that the means for positioning the ball-cage (2) axially relative to the sleeve are ball-bearing stop means (10).

12.—An element according to Claim 1, characterised in that the means for positioning the ball-cage (2) axially relative to the sleeve are at least one ball (10) located in a distinct seating (11) in the casing and intersecting its wall opposite an internal circular groove (12) in the sleeve (1) at one end at least of the element.

13.—An element according to Claim 12, characterised in that the means for axially positioning the ball-cage (2) in a circular groove are two balls (10) situated at a distance of 180° from one another on an axis perpendicular to the bisecting line of the center angle separating the two longitudinal rectilinear working contact portions of the two circuits which are equipped with the largest bearings (7) of the element.

14.—An element according to Claims 12 and 13, characterised in that at least one internal circular groove (12) in the sleeve (1), serving for the passage of the curved portions of the ball-circulation circuits, is the same circular groove that positions the balls (10) for the axial retention of the casing (2) relative to the sleeve (1).

15.—An element according to Claim 1 and any one of Claims 12, 13 and 14, characterised in that the ball-cage (2) has at least at one of its ends, means (14) for the angular positioning of an additional piece (13) on the element.

16.—An element according to Claim 15, characterised in that the angular positioning means (14) are located at the two ends of the ball-cage (2), the means at one end being offset by 180° with respect to the means at the other end.

17.—An element according to Claim 15, characterised in that the additional piece is at least a coupling distance sleeve (13) comprising means engaging with the annular positioning means (14) of the casing (2).

18.—An element according to Claim 1, characterised in that the external sleeve (1, 21) is made of a previously hardened steel which is then precision-ground on its external surface and in its interior bore.

19.—An element according to Claim 1, characterised in that the sleeve (1) has two external diameters, the larger diameter portion (15) of the sleeve having a length not exceeding a quarter of the total length of the element.

20.—An element according to Claim 1, characterised in that the tongue-like portions of the ball-cage (2) supporting the central part of the circulation circuits (4) have different cross-section at the two ends of the circuits.

21.—An element according to Claims 2 and 20, characterised in that the central parts of the circulation circuits (4) are joined to the ball-cage (2) by three tongue-like portions, two of these tongue-like portions being situated at one end of the circuits (4).

22.—An element according to Claims 1 and 10, characterised in that the sleeve (21) has the form of a cylindrical collar shorter than the element and is held between two rotary caps (24) fixed to the ball-cage (22), the internal front face of each of the caps (24) exerting a frictional force on corresponding front faces of the sleeve (21), the whole assembly comprising the cage (22) and the caps (24) being free to rotate relative to the sleeve.

23.—An element according to Claim 22, characterised in that the rotary caps (24) comprise tunnel-shaped housings parallel to the element axis and opposite the curved portions (30) of the ball circulation circuits.

24.—An element according to Claim 22, characterised in that the rotary caps (24) are secured to the ball-cage (22) by interengaging means (33, 34) which are of corresponding shapes.

25.—An element according to Claims 1 or 22, characterised in that the ball-cage (2, 22) and/or the caps (24) are made of a plastics material such as polyamide.

26.—An element according to Claim 22, characterised in that the rotary caps (24) comprise on their external diameter housing means for at least one circular ring made of a flexible material.

27.—An element according to Claim 22, characterised in that the tubular steel collar comprises on its external diameter at least one circular groove (36) for receiving at least one elastomeric ring (35).

28.—An element according to Claim 1, characterised in that the external diameter of the sleeve (1, 21) is trued eccentrically with respect to its inner diameter by a factor equal to the eccentricity created by the balls of different diameters in the circulation circuits.

29.—An element according to Claim 1 or 28, characterised in that the sleeve (1, 21) is fixed relative to the ball-cage (2, 22).

30.—An element according to Claim 28, characterised in that the sleeve (1, 21) is fixed relative to the ball-cage (2, 22) in a manner to eliminate the eccentricity created by the balls of different diameters in the circuits.

FIG 1.

FIG 2.

0013 259

FIG 3.

FIG 4.

FIG 5.

0013259

FIG 6.

FIG 7.   12   2   3   15   16   1

FIG 8.

15   13

FIG 10.

FIG 9.

FIG 12.

FIG 11.

FIG.13

FIG. 14

FIG. 15

FIG.16